# EUROPÄISCHE PATENTSCHRIFT

(11) **EP 1 863 300 B1**
(45) Veröffentlichungstag und Bekanntmachung des Hinweises auf die Patenterteilung: **03.11.2010**
(21) Anmeldenummer: 07005990.2
(22) Anmeldetag: 23.03.2007
(51) Int. Cl.: H04W 28/08

(54) **Lastverteilungsverfahren in einem Funkkommunikationssystem**
Load distribution method in a wireless communication system
Procédé de répartition des charges dans un système de communication radio

(30) Priorität: 31.05.2006 DE 102006025295
(43) Veröffentlichungstag der Anmeldung: 05.12.2007
(73) Patentinhaber: Rheinmetall Defence Electronics GmbH, 28309 Bremen (DE)
(72) Erfinder: Ackzien, Michael, 28205 Bremen (DE)
(74) Vertreter: Thul, Hermann

(56) Entgegenhaltungen:
- WO-A-00/07401
- WO-A-01/10158
- WO-A-03/069940

## Beschreibung

Die vorliegende Erfindung betrifft ein Lastverteilungsverfahren in einem Funkkommunika-tionssystem mit mindestens einer Teilnehmereinheit und mindestens einer Basisstation.

Funkkommunikationssysteme, die einen größeren geographischen Bereich abdecken und/oder eine Vielzahl von Teilnehmereinheiten versorgen, sind üblicherweise zellular aufgebaut, wobei eine Zelle von einer Basisstation ausgeleuchtet wird und sich benachbarte Zellen oftmals überlappen. In jeder Zelle ist mindestens eine Funkfrequenz vorgesehen, auf der die Teilnehmereinheiten mit der Basisstation kommunizieren. Eine Funkfrequenz, die auch als Kanal bezeichnet wird, ist weiter unterteilbar. So stehen beispielsweise in einem TDMA-System (TDMA: Time Division Multiple Access) in einem Kanal mehrere Zeitschlitze und in einem CDMA-System (CDMA: Code Division Multiple Access) mehrere Codes pro Kanal zur Verfügung. Ein solcher Zeitschlitz beziehungsweise ein solcher Code wird im Folgenden als Ressource bezeichnet. Weiterhin ist es möglich, dass sich mehrere Teilnehmereinheiten eine Ressource teilen.

In einem vorstehend beschriebenen Kommunikationssystem ist es unerlässlich, den Teilnehmereinheiten die Ressourcen derart zuzuweisen, dass keine Ressource überlastet ist. Bei einer Überlastung würde beispielsweise eine Reduzierung der übertragbaren Datenmenge eintreten. In den bekannten Funkkommunikationssystemen wird die Lastverteilung oftmals durch die Basisstationen und die dahinter liegende Infrastruktur vorgenommen. Ein derartiges Verfahren ist beispielsweise in der europäischen Patentanmeldung EP 1 583 284 A1 beschrieben.

Das Dokument WO 03/069940 offenbart ein Verfahren zur Funkzellenauswahl in Funk-Kommunikationssystemen. Bei der Auswahl einer geeigneten Basisstation berücksichtigt die Teilnehmerstation Informationen über die jeweilige aktuelle Lastsituation in den Funkzellen der Basisstationen. Diese Informationen werden von einer oder mehreren der Basisstationen beispielsweise in einem Broadcast-Kanal ausgesendet.

Die bekannten Lastvertellungsverfahren weisen den Nachteil auf, dass bei der Zuweisung einer neuen Ressource zu einer Teilnehmereinheit eine Kommunikation zwischen der Teilnehmereinheit und der Basisstation auf der überlasteten Ressource notwendig ist. Es ist daher die Aufgabe der vorliegenden Erfindung, ein Lastverteilungsverfahren in einem Funkkommunikationssystem bereitzustellen, das den vorgenannten Nachteil nicht aufweist.

Gelöst wird diese Aufgabe erfindungsgemäß durch die Merkmalskombination des Patentanspruchs 1. Vorteilhafte Ausgestaltungeformen sind den abhängigen Patentansprüchen zu entnehmen.

Das erfindungsgemäße Lastverteilungsverfahren weist eine Ressourcenzuweisung auf mit den Schritten Ermitteln verfügbarer Ressourcen durch die Teilnehmereinheit, zufälliges Auswählen einer im Wesentlichen beliebigen der verfügbaren Ressourcen durch die Teilnehmereinheit und Wechsel auf die ausgewählte Ressource.

Beim Ermitteln der verfügbaren Ressourcen bestimmt die Teilnehmereinheit die er reichbaren Basisstationen sowie die von den Basisstationen jeweils zur Verfügung gestellten Kanäle. Die innerhalb eines Kanals verfügbaren Ressourcen werden ebenfalls ermittelt oder sind der Teilnehmereinheit bekannt. Der TETRA-Funk (TETRA; TErrestrial Trunked RAdio) als TDMA-System bietet beispielsweise vier Zeitschlitze pro Kanal. Anschließend wählt die Teilnehmereinheit zufällig eine im Wesentlichen beliebige der verfügbaren Ressourcen. Bevorzugt ist die bislang genutzte Ressource von der Auswahl ausgeschlossen. Optional sind andere oder weitere Ausschlusskriterien möglich, beispielsweise der Ausschluss von Ressourcen im gleichen Kanal wie die alte Ressource. Der dritte Schritt der Ressourcenzuweisung besteht im Wechsel auf die ausgewählte Ressource. Dies bedeutet, dass die Teilnehmereinheit auf der ausgewählten Ressource Daten an die zugehörige Basisstation überträgt oder sich an der Basisstation anmeldet. Der Vorteil des zufälligen Auswählens der neuen Ressource aus den verfügbaren Ressourcen durch die Teilnehmereinheit führt zu einer exakten oder zumindest annähernden Gleichverteilung der Teilnehmereinheiten über die Ressourcen.

Die Ressource, auf der die Teilnehmereinheit mit der Basisstation kommuniziert oder auf der sie an der Basisstation angemeldet ist, wird als aktuelle Ressource bezeichnet. Bei einer Neuzuweisung der Ressource wird die aktuelle Ressource zur alten Ressource und die während der Zuweisung ausgewählte Ressource zur neuen beziehungsweise zukünftig aktuellen Ressource.

Bevorzugt ist eine Ressource auf der gleichen Basisstation und der gleichen Frequenz von der Auswahl ausgeschlossen. Dies gilt nur, wenn eine alternative Ressource, also eine Ressource auf einer anderen Basisstation und/oder einer anderen Frequenz, verfügbar ist. Dies ist besonders vorteilhaft, wenn die Neuzuweisung der Ressource durch eine gestörte Funkverbindung notwendig wird. Dadurch, dass die alte und die neue Ressource nicht die gleiche Frequenz der gleichen Basisstation nutzen, wird eine Ressource mit anderen Ausbreitungsbedingungen zwischen der Teilnehmereinheit und der Basisstation gewählt.

Die Ressourcenzuweisung wird beispielsweise beim Einschalten einer Teilnehmereinheit durchgeführt. Das Einschalten der Teilnehmereinheit führt dazu, dass diese eine Kommunikationsverbindung zu einer Basisstation aufbauen muss. Die zufällige Auswahl einer der verfügbaren Ressourcen sorgt für eine exakte oder annähernde Gleichverteilung der Teilnehmereinheiten auf die Ressourcen. Dies gilt beim Einschalten einer einzelnen Teilnehmereinheit wie für die Inbetriebnahme des gesamten Funkkommunikationssystems.

Alternativ oder zusätzlich wird die Ressourcenzuweisung bei überlasteter alter Ressource durchgeführt. Nutzen zu viele Teilnehmereinheiten eine Ressource, so reduziert sich beispielsweise durch Kollisionen der effektive Datendurchsatz auf der Ressource. Dem wird dadurch entgegen getreten, dass eine oder mehrere Teilnehmereinheiten auf eine andere Ressource wechseln. Eine überlastete Ressource liegt beispielsweise vor, wenn eine festgelegte Anzahl Sendeversuche hintereinander fehlschlägt. Ein Sendeversuch ist fehlgeschlagen, wenn beispielsweise der Empfang der gesendeten Daten nicht von der Basisstation quittiert wird.

Alternativ oder zusätzlich liegt eine überlastete Ressource bei einer festgelegten Anzahl fehlgeschlagener Sendeversuche in einer definierten Zeitspanne vor. Die Anzahl fehlgeschlagener Sendeversuche wird beispielsweise in einem gleitenden Zeitfenster aufsummiert und mit einem festgelegten Grenzwert verglichen. Wird dieser Grenzwert erreicht oder überschritten, so stößt die Teilnehmereinheit eine Ressourcenzuweisung an.

Ist bei einer neuen Ressourcenzuweisung keine andere als die aktuelle Ressource verfügbar, so wird bevorzugt die Kommunikation auf der aktuellen Ressource fortgesetzt.

In einer Ausgestaltungsform der Erfindung versendet die Teilnehmereinheit bei Zuweisung einer neuen Ressource eine Abmeldenachricht an die alte Ressource. Dadurch wird die zu der alten Ressource gehörende Basisstation darüber informiert, dass die Teilnehmereinheit die Datenübertragung auf der alten Ressource einstellt.

Optional versendet die Teilnehmereinheit eine Anmeldenachricht an die neue Ressource. Mit dieser Nachricht meldet sich die Teilnehmereinheit an der zu der neuen Ressource gehörenden Basisstation an. Die Basisstation erwartet somit Aussendungen der Teilnehmereinheit auf der neuen Ressource.
In einer Ausgestaltungsform der Erfindung überträgt die zu der neuen Ressource gehörende Basisstation die Information, dass sie nun in Funkkontakt mit der Teilnehmereinheit steht, an die Basisstation der alten Ressource. Somit erfolgt die Abmeldung der Teilnehmereinheit von der Basisstation der alten Ressource ohne zusätzlichen Datenverkehr auf der Luftschnittstelle.

Das vorstehend beschriebene Lastverteilungsverfahren eignet sich insbesondere zur Verwendung in einem Funkkommunikationssystem in einem Gefechtsübungszentrum oder einem Gefechtsfeldsimulator.

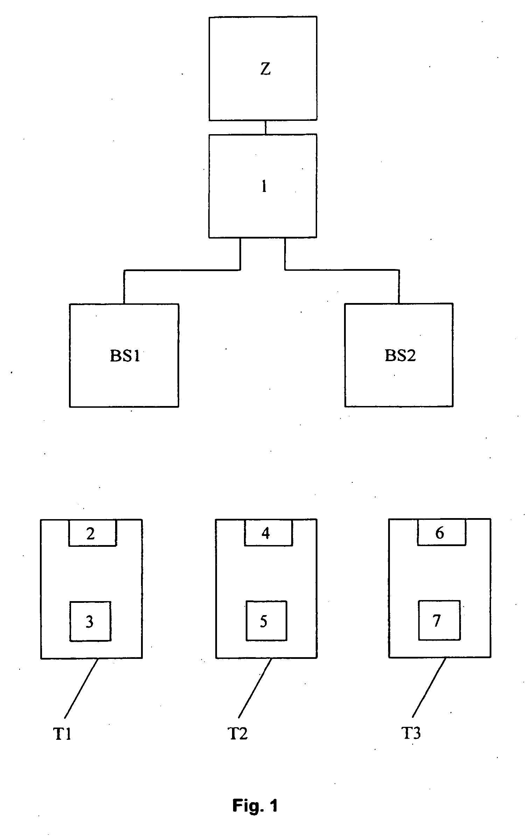

Die vorliegende Erfindung soll anhand eines Ausführungsbeispiels näher erläutert werden. Dabei zeigt
- Figur 1: den schematischen Aufbau eines Funkkommunikationssystems
- Figur 2: eine beispielhafte Aufstellung verfügbarer Ressourcen.

Das nachfolgende Ausführungsbeispiel betrifft ein Funkkommunikationssystem in einer Gefechtsfeldsimulation, bei der sich Teilnehmer in einem begrenzten räumlichen Gebiet frei bewegen. Dieses Gebiet wird mittels der Basisstationen BS1 und BS2 mit einem Funknetz abgedeckt. Die Teilnehmer, beispielsweise Soldaten oder Fahrzeuge, tragen jeweils eine Teilnehmereinheit, wobei im vorliegenden Ausführungsbeispiel exemplarisch drei Teilnehmereinheiten T1, T2 und T3 dargestellt sind. Jede Teilnehmereinheit enthält ein Rechen-modul 3, 5 beziehungsweise 7 sowie ein Funkmodul 2, 4 beziehungsweise 6. Über die Funkmodule stehen die Teilnehmereinheiten in Kontakt mit den Basisstationen. Die Basisstationen sind über eine Zentralstation 1 des Funkkommunikationssystems mit einem Zentralrechner Z verbunden, der die aktuelle Lage im Gefechtsfeld auswertet und darstellt. Dazu senden die Teilnehmereinheiten Daten wie beispielsweise die Position des Teilnehmers, das Abfeuern einer Waffe oder einen Treffer durch eine Waffe über die Basisstationen und die Zentralstation an den Zentralrechner. Die Zentralstation koordiniert die Basisstationen und dient als Schnittstelle zwischen dem Funkkommunikationssystem und dem Zentralrechner Z.

Die Funkfelder der Basisstationen BS1 und BS2 sind im vorliegenden Ausführungsbeispiel überlappend. Die Teilnehmereinheiten T1 und T2 befinden sich an Orten, die sowohl von der Basisstation BS1 als auch von der Basisstation BS2 bedient werden. Die Teilnehmereinheit T3 befindet sich nur im Funkfeld der Basisstation BS2.

Die drahtlose Kommunikation zwischen den Teilnehmereinheiten T1, T2 und T3 und den Basisstationen BS1 und BS2 findet über TETRA-Funk mit vier Zeitschlitzen pro Kanal statt. Je nach Frequenzband, in dem das TETRA-Funksystem betrieben wird, steht eine bestimmte Anzahl an Kanälen zur Verfügung, beispielsweise 49. Jede Basisstation nutzt eine gewisse Anzahl dieser Kanäle. Überlappen sich die Zellen zweier Basisstationen, so wird ein bestimmter Kanal bevorzugt nur von einer der Basisstationen benutzt, um Kollisionen zu vermeiden. Der Datenaustausch erfolgt mittels des für TETRA standardisierten Short Data Service (SDS).

Im vorliegenden Beispiel nutzt die Basisstation BS1 die Kanäle K6, K9 und K17 sowie die Basisstation BS2 die Kanäle K8 und K21. Somit stehen in der Zelle der Basisstation BS1 zwölf Ressourcen in Form von Zeitschlitzen zur Verfügung. In der Zelle der Basisstation BS2 stehen acht Ressourcen zur Verfügung.

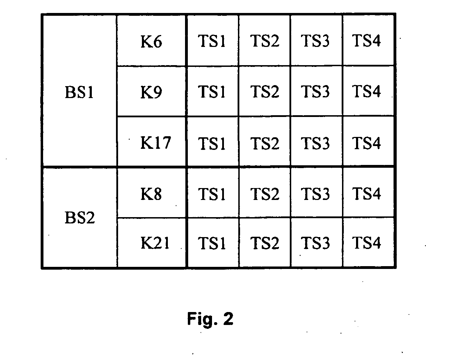

Nach dem Einschalten der Teilnehmereinheit T1 wird die Zuweisung einer Ressource durchgeführt, über die die Teilnehmereinheit T1 mit dem Zentralrechner Z in Verbindung tritt. Dazu ermittelt die Teilnehmereinheit T1 zunächst die verfügbaren Ressourcen. Da sich die Teilnehmereinheit im Funkfeld sowohl der Basisstation BS1 als auch der Basisstation BS2 befindet, detektiert das Funkmodul 2 alle fünf in Figur 2 dargestellten Kanäle K6, K8, K9, K17 und K21. Da in jedem Kanal vier Ressourcen zur Verfügung stehen, ermittelt das Funkmodul 2 eine Gesamtmenge von 20 verfügbaren Ressourcen.

Beim Einschalten erteilt das Rechenmodul 3 dem Funkmodul 2 den Befehl zum Ermitteln der verfügbaren Ressourcen, alternativ startet das Funkmodul die Ermittlung selbsttätig. Das Funkmodul 2 der Teilnehmereinheit T1 wählt zufällig eine der 20 zur Verfügung stehenden Ressourcen, beispielsweise den Zeitschlitz TS2 im Kanal K17 auf der Basisstation BS1, und wechselt auf diese Ressource. Für die Aussendung von Daten der Teilnehmereinheit T1 an den Zentralrechner Z wird bis auf weiteres diese Ressource verwendet.

Ist diese aktuelle Ressource im weiteren Betrieb überlastet, so wird eine neue Ressourcenzuweisung durchgeführt. Eine Ressource gilt als überlastet, wenn eine festgelegte Anzahl fehlgeschlagener Sendeversuche direkt hintereinander oder in einer definierten Zeitspanne vorliegt. Ein fehlgeschlagener Sendeversuch wird von dem Funkmodul 2 an das Rechenmodul 3 gemeldet. Das Rechenmodul 3 überwacht die Anzahl fehlgeschlagener Sendeversuche und erteilt dem Sendemodul 2 den Befehl zu einer neuen Ressourcenzuweisung, wenn eines der vorstehenden Kriterien erfüllt ist. Alternativ kann die Überwachung und Befehlsgebung auch direkt im Funkmodul erfolgen.

Bei der neuen Ressourcenzuweisung ermittelt das Funkmodul 2 der Teilnehmereinheit T1 wieder alle verfügbaren Ressourcen. Dies sind wieder jeweils vier Zeitschlitze in den Kanälen K6, K9 und K17 der Basisstation BS1 sowie den Kanälen K8 und K21 der Basisstation BS2. Das Sendemodul 2 wählt daraus zufällig eine der verfügbaren Ressourcen. Bevorzugt wird die Ressource TS2 im Kanal K17 der Basisstation BS1 von der Auswahl ausgeschlossen, damit die alte Ressource und die neue Ressource auseinander fallen. Optional werden alle Ressourcen im Kanal K17 der Basisstation BS1 ausgeschlossen, damit die alte Ressource und die neue Ressource in unterschiedlichen Kanälen angeordnet sind. Dies ist insbesondere dann von Vorteil, wenn der gesamte Kanal der alten Ressource gestört ist, beispielsweise durch schlechte Ausbreitungsbedingungen oder ein störendes Funkfeld.

Das vorstehende Ausführungsbeispiel ist rein exemplarisch und insofern nicht beschränkend. Dies betrifft insbesondere die Anzahl der Teilnehmer sowie der Basisstationen und der auf jeder Basisstation verfügbaren Anzahl Kanäle. Optional erfolgt die Ermittlung der verfügbaren Ressourcen fortlaufend parallel zum laufenden Betrieb alternativ oder zusätzlich zu der Ermittlung bei der Neuzuweisung der Ressource. Anstatt des TETRA-Funks, bei dem die Ressourcen aus Zeitschlitzen bestehen, kann auch jedes andere Funksystem eingesetzt werden, beispielsweise ein CDMA-System, bei dem eine Ressource aus einem Code besteht.

## Patentansprüche

1. Lastvertellungsverfahren in einem Funkkommunikationssystem mit mindestens einer Teilnehmereinheit (T1, T2, T3) und mindestens einer Basisstation (BS1, BS2), die Ressourcen wie Kanäle, Zeitschlitze oder Codes bereitstellt, aufwelsend einen Wechsel von einer aktuellen Ressource, auf der die Teilnehmereinheit (T1, T2, T3) mit einer Basisstation (BS1, BS2) kommuniziert oder auf der sie an der Basisstation (BS1, BS2) angemeldet ist, auf eine neue Ressource, wenn die aktuelle Ressource überlastet ist, wobei die aktuelle Ressource überlastet ist, wenn eine festgelegte Anzahl fehlgeschlagener Sendeversuche vorliegt, mit den Schritten
- Ermitteln verfügbarer Ressourcen durch die Teilnehmereinheit (T1; T2, T3),
- zufälliges Auswählen einer im Wesentlichen beliebigen der verfügbaren Ressourcen durch die Teilnehmereinheit (T1, T2, T3) und
- Wechsel auf die ausgewählte Ressource als neue Ressource,
wobei beim Wechsel keine Kommunikation auf der überlasteten Ressource notwendig ist.

2. Lastverteilungsverfahren nach Anspruch 1, **dadurch gekennzeichnet, dass** die Ressourcenzuweisung beim Einschalten einer Teilnehmereinheit (T1, T2, T3) durchgeführt wird.

3. Lastverteilungsverfahren nach Anspruch 1, **dadurch gekennzeichnet, dass** die Ressourcenzuweisung bei überlasteter aktueller Ressource durchgeführt wird.

4. Lastverteilungsverfahren nach Anspruch 3, **dadurch gekennzeichnet, dass** eine überlastete Ressource bei einer festgelegten Anzahl fehlgeschlagener Sendeversuche direkt hintereinander vorliegt.

5. Lastverteilungsverfahren nach Anspruch 3, **dadurch gekennzeichnet, dass** eine überlastete Ressource bei einer festgelegten Anzahl fehlgeschlagener Sendeversuche In einer definierten Zeitspanne vorliegt.

6. Lastverteilungsverfahren nach einem der Ansprüche 3 bis 5, **dadurch gekennzeichnet, dass** die Teilnehmereinheit (T1, T2, T3)) bei Zuweisung einer neuen Ressource eine Abmeldenachricht an die alte Ressource versendet.

7. Lastverteilungsverfahren nach einem der Ansprüche 1 bis 6, **dadurch gekennzeichnet, dass** die Teilnehmereinhelt (T1, T2, T3) eine Anmeldenachricht an die neue Ressource versendet.

8. Lastverteilungsverfahren nach einem der Ansprüche 1 bis 7, **dadurch gekennzeichnet, dass** eine, Ressource auf der gleichen Basisstation (BS1, BS2) und der gleichen Frequenz von der Auswahl ausgeschlossen ist.

9. Verwendung des Lastverteilungsverfahrens gemäß einem der Ansprüche 1 bis 8 in einem Funkkommunikationssystem In einem Gefechtsübungszentrum oder einem Gefechtsfeldslmulator.

## Claims

1. Load distribution method in a radio communication system with at least one subscriber unit (T1, T2, T3) and at least one base station (BS1, BS2) which provides resources such as channels, time slots or codes, comprising a change from a current resource, on which the subscriber unit (T1, T2, T3) communicates with a base station (BS1, BS2) or on which it is registered on the base station (BS1, BS2), to a new resource when the current resource is overloaded, wherein the current resource is overloaded when there is a stipulated number of failed transmission attempts, having the steps of
- ascertainment of available resources by the subscriber unit (T1, T2, T3),
- random selection of an essentially arbitrary one of the available resources by the subscriber unit (T1, T2, T3), and
- changing to the selected resource as the new resource,
wherein the change does not require any communication on the overloaded resource.

2. Load distribution method according to Claim 1, **characterized in that** the resource allocation is performed when a subscriber unit (T1, T2, T3) is switched on.

3. Load distribution method according to Claim 1, **characterized in that** the resource allocation is performed when the current resource is overloaded.

4. Load distribution method according to Claim 3, **characterized in that** a resource is overloaded when there is a stipulated number of failed transmission attempts in direct succession.

5. Load distribution method according to Claim 3, **characterized in that** a resource is overloaded when there is a stipulated number of failed transmission attempts in a defined period of time.

6. Load distribution method according to one of Claims 3 to 5, **characterized in that** the subscriber unit (T1, T2, T3) sends a registration message to the old resource when a new resource is allocated.

7. Load distribution method according to one of Claims 1 to 6, **characterized in that** the subscriber unit (T1, T2, T3) sends a registration message to the new resource.

8. Load distribution method according to one of Claims 1 to 7, **characterized in that** a resource on the same base station (BS1, BS2) and the same frequency is precluded from the selection.

9. Use of the load distribution method according to one of Claims 1 to 8 in a radio communication system in a field exercise centre or a battlefield simulator.

## Revendications

1. Procédé de répartition de la charge dans un système de radiocommunication comprenant au moins une unité d'abonné (T1, T2, T3) et au moins une station de base (BS1, BS2) qui mettent à disposition des ressources telles que des canaux, des créneaux temporels ou des codes, présentant un basculement d'une ressource actuelle, sur laquelle l'unité d'abonné (T1, T2, T3) communique avec une station de base (BS1, BS2) ou sur laquelle elle est connectée à la station de base (BS1, BS2), à une nouvelle ressource lorsque la ressource actuelle est surchargée, la ressource actuelle étant surchargée lorsqu'il existe un nombre donné de tentatives d'émission ayant échoué, comprenant les étapes suivantes :
- détermination des ressources disponibles par l'unité d'abonné (T1, T2, T3),
- sélection aléatoire par l'unité d'abonné (T1, T2, T3) d'une ressource essentiellement quelconque parmi les ressources disponibles et
- basculement sur la ressource sélectionnée en tant que nouvelle ressource,
aucune communication sur la ressource surchargée n'étant nécessaire lors du basculement.

2. Procédé de répartition de la charge selon la revendication 1, **caractérisé en ce que** l'attribution des ressources est effectuée lors de la mise sous tension d'une unité d'abonné (T1, T2, T3).

3. Procédé de répartition de la charge selon la revendication 1, **caractérisé en ce que** l'attribution des ressources est effectuée lorsque la ressource actuelle est surchargée,

4. Procédé de répartition de la charge selon la revendication 3, **caractérisé en ce qu'**une ressource est considérée surchargée après avoir constaté un nombre donné de tentatives d'émission ayant échoué directement les unes après les autres.

5. Procédé de répartition de la charge selon la revendication 3, **caractérisé en ce qu'**une ressource est considérée surchargée après avoir constaté un nombre donné de tentatives d'émission ayant échoué pendant un intervalle de temps défini.

6. Procédé de répartition de la charge selon l'une des revendications 3 à 5, **caractérisé en ce que** l'unité d'abonné (T1, T2, T3) envoie un message de déconnexion à l'ancienne ressource lors de l'attribution d'une nouvelle ressource.

7. Procédé de répartition de la charge selon l'une des revendications 1 à 6, **caractérisé en ce que** l'unité d'abonné (T1, T2, T3) envoie un message de connexion à la nouvelle ressource.

8. Procédé de répartition de la charge selon l'une des revendications 1 à 7, **caractérisé en ce qu'**une ressource sur la même station de base (BS1, BS2) et à la même fréquence est exclue de la sélection.

9. Utilisation du procédé de répartition de la charge selon l'une des revendications 1 à 8 dans un système de radiocommunication dans un centre d'entraînement au combat ou dans un simulateur de champ de bataille.
